# EUROPÄISCHE PATENTSCHRIFT

(11) **EP 0 341 426 B1**
(45) Veröffentlichungstag und Bekanntmachung des Hinweises auf die Patenterteilung: **29.12.1993**
(21) Anmeldenummer: 89106130.1
(22) Anmeldetag: 07.04.1989
(51) Int. Cl.: B60R 7/06, B60N 3/08

(54) **Hilfsvorrichtung zum Öffnen und Schliessen von schwenkbar gelagerten Deckeln, Abdeckplatten u. dgl.**
Auxiliary device for opening and closing pivoting lids, covering plates and the like
Dispositif d'assistance à l'ouverture et à la fermeture de couvercles, plaques de recouvrement et éléments pivotants similaires

(30) Priorität: 11.05.1988 DE 3816091
(43) Veröffentlichungstag der Anmeldung: 15.11.1989
(73) Patentinhaber: A. Raymond & Cie, 38028 Grenoble (FR)
(72) Erfinder: Enrietti, Leo, Pont St. Martin/Aostatal (IT)
(74) Vertreter: Kirchgaesser, Johannes, Dipl.-Ing.

(56) Entgegenhaltungen:
- PATENT ABSTRACTS OF JAPAN vol. 8, no. 12 (M-269)(1449) 19 Januar 1984,& JP-A-58 174038 (NISSAN JIDOSHA K.K.) 13 Oktober 1983,
- PATENT ABSTRACTS OF JAPAN vol. 9, no. 187 (M-401)(1910) 03 August 1985,& JP-A-
- 60 53442 (NITSUSAN SHIYATAI K.K.) 27 März 1985,

## Beschreibung

Die Erfindung bezieht sich auf eine Hilfsvorrichtung zum Öffnen und Schließen von schwenkbar gelagerten Deckeln, Abdeckplatten und dergleichen.

Die der Erfindung zugrundeliegende Hilfsvorrichtung besteht hierbei aus einem länglichen, zylinderförmig ausgebildeten Gehäuse und einem darin verschieblich geführten, kolbenartigen Stößel, welcher durch eine Spiralfeder in der eingefahrenen Stellung gehalten wird und durch einen Rastmechanismus in der ausgefahrenen Stellung fixierbar ist, wobei die Luft im Zylinderraum über eine düsenförmige Öffnung unter Überwindung eines die Stößelbewegung bremsenden Widerstandes einströmen und entweichen kann. Die düsenförmige Öffnung ist in ihrem Öffnungsquerschnitt unter Berücksichtigung der Federkraft dabei so bemessen, daß die Öffnungsbewegung oder auch die Schließbewegung mit der gewünschten Verzögerung abläuft.

Aus US - A - 1 334 081 ist eine derartige Hilfsvorrichtung bekannt, welche zum Öffnung und Schließen einer schwenkbar gelagerten Türe verwendet wird. Bei dieser Hilfsvorrichtung besteht der Rastmechanismus aus einem mit der Hilfsvorrichtung verbundenen Führungs- und Haltegestänge, welches in der Öffnungsstellung der Türe einen toten Punkt erreicht, so daß die Türe in dieser Stellung gehalten wird.

Im Hinblick auf die bei der Erfindung angestrebte Verwendung der Hilfsvorrichtung als Betätigungshilfe beim Herausklappen eines Deckels oder eines Aschenbechers im Kraftfahrzeugbau wird es bei der bekannten Hilfsvorrichtung als Nachteil empfunden, daß sich das Gestänge außerhalb des Gehäuses der Hilfsvorrichtung befindet und demzufolge entsprechend Platz benötigt. Auch ist das Fixieren einer Schwenkstellung über den toten Punkt eines Haltegestänges sehr labil und daher für den vorliegenden Anwendungsfall nicht geeignet, weil der Schließvorgang durch eine unbeabsichtigte Seitenbewegung auf das Gestänge ausgelöst werden kann.

Aufgabe der Erfindung ist es daher, den Rastmechanismus im Führungszylinder der vorgenannten Hilfsvorrichtung zu integrieren und so zu gestalten, daß der Stößel in der ausgefahrenen Stellung eine stabile Raststelle aufweist, die nur durch Überwindung eines Widerstandes ausrastbar ist. Dabei ist zu beachten, daß die Hilfsvorrichtung aus möglichst wenigen Einzelteilen gebildet wird, und daß diese im Hinblick auf eine kostengünstige Herstellung einfach geformt sind und sich leicht zusammenfügen lassen.

Zur Lösung dieser Aufgabe werden die im Anspruch 1 angegebenen kennzeichnenden Merkmale vorgeschlagen. Dadurch wird beim Öffnen des Deckels erreicht, daß nach kurzem Andrücken des Deckelrandes die Öffnungsbewegung durch die Zugkraft der Spiralfeder selbsttätig abläuft und durch die düsenförmige Öffnung im Zylinder gebremst wird. Verschließt man den Deckel, so wird die Spiralfeder automatisch gespannt und durch den Rastmechanismus in der gespannten Lage gehalten.

Durch die Maßnahmen nach Anspruch 2 wird ferner erreicht, daß im Innern der Kolben-Zylindereinheit Platz zur mittigen Anordnung der Spiralfeder geschaffen wird, wodurch der Kolben ohne Gefahr der Verkantung in den Zylinder eingezogen wird.

In der Zeichnung ist ein Ausführungsbeispiel der Hilfsvorrichtung gezeigt und soll nachfolgend näher erläutert werden. Es zeigt
- Fig. 1: die Hilfsvorrichtung im zusammengezogenen Zustand im Längsschnitt gemäß Linie I - I in Fig. 2,
- Fig. 2: die Hilfsvorrichtung im auseinandergezogenen Zustand im Längsschnitt gemäß Linie II - II nach Fig. 1,
- Fig. 3: die Hilfsvorrichtung im auseinandergezogenen Zustand wie in Fig. 2, jedoch in Draufsicht mit Teilschnitt im Rastbereich und
- Fig. 4: die Rasthülse in Vorderansicht.

Die in den Figuren dargestellte Hilfsvorrichtung besteht aus einem zylinderförmig ausgebildeten Gehäuse 1 und einem darin verschieblich geführten Stößel 2, der durch eine Spiralfeder 3 in der eingefahrenen Stellung gehalten wird. In der Stirnwand 4 des Gehäuses 1 sind zwei düsenförmige Öffnungen 5 vorgesehen, durch welche die Luft in den Zylinderraum 6 des Gehäuses 1 einströmen und aus diesen auch wieder entweichen kann.

Das Gehäuse 1 hat hierbei eine zylinderförmige Aussparung 7, welche zur mittigen Aufnahme der Spiralfeder 3 dient. Diese ist mit ihrem einen Ende im Gehäuse 1 an einem Quersteg 8 und mit ihrem anderen Ende am Stößel 2 an einem Haken 9 eingehängt. Die Aussparung 7 ist umgeben von der inneren Zylinderwand 10, so daß der im Querschnitt ringförmige Stößel 2 in dem zwischen der äußeren Zylinderwand 11 und der inneren Zylinderwand 10 verbleibenden ringförmigen Zylinderraum 6 des Gehäuses 1 verschieblich geführt ist.

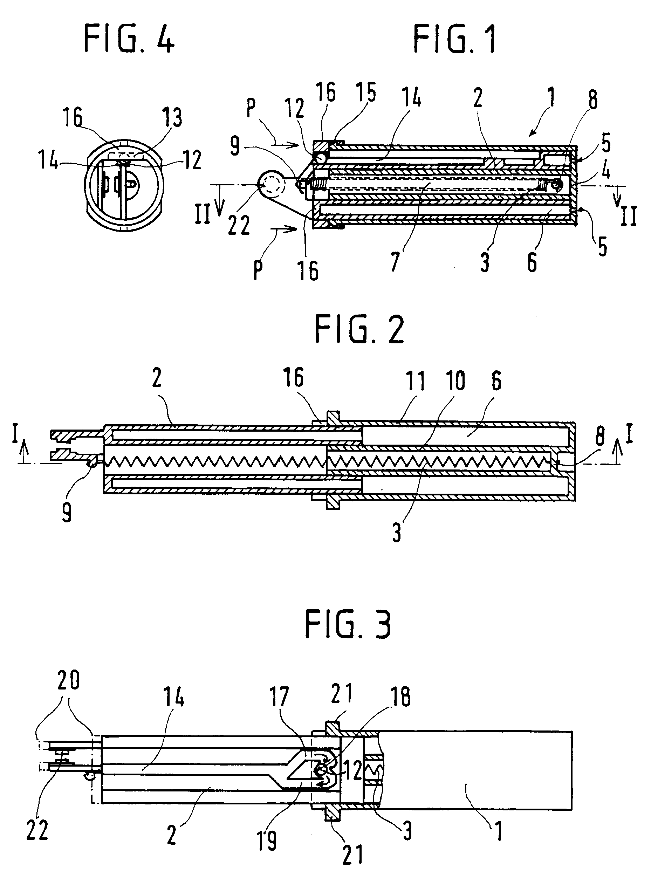

Um den Stößel 2 in der ausgefahrenen Stellung fixieren zu können, ist ein Rastmechanismus vorgesehen, der durch die nachstehend näher beschriebene Zwangsführung einer Kugel 12 gebildet wird. Diese Kugel 12 ist am Austrittsende des Gehäuses 1 in einer Rinne 13 querverschieblich geführt und am Stößel 2 in einer im wesentlichen achsparallelen Rinne 14 eingebettet, wobei die Querrinne 13 in einer auf das Gehäuseende in Richtung der Pfeile P aufsteckbaren und in den Rastnasen 15 einrastbaren Hülse 16 angeordnet ist (Fig. 4). Wie aus Fig. 3 ersichtlich, gabelt sich die Rinne 14 am Führungsende des Stößels 2 derart, daß die Kugel 12 beim Herausziehen des Stößels 2 auf der - in der Zeichnung oberen - Rinne 17 bis zur Rastnische 18 wandert, wobei der Stößel 2 von der äußersten, strichpunktiert dargestellten Stellung 20 durch die Spiralfeder 3 wieder etwas zurückgezogen wird. Wird der Stößel 2 ein weiteres Mal bis zur Stellung 20 herausgezogen, dann wandert die Kugel 12 zwangsläufig in die untere Rinne 19, um dann beim Einfahren des Stößels 2 wieder in die mittlere Längsrinne 14 zurückzurollen.

Diese Einfahrbewegung des Stößels wird durch die Kraft der beim Ausfahren gespannten Feder 3 bewirkt und läuft nur langsam ab, weil die Luft im Zylinderraum 6 nur langsam durch die düsenförmigen Öffnungen 5 entweichen kann. Der Öffnungsquerschnitt der Öffnungen 5 ist hierbei so bemessen, daß der Bewegungsablauf in der gewünschten Weise verzögert wird.

Das Gehäuse 1 kann mit zwei seitlich abstehenden Zapfen 21 in einem nicht dargestellten Trägerkörper schwenkbar gelagert werden und der Stößel 2 besitzt an seinem vorderen Ende ebenfalls zwei gegeneinander gerichtete Zapfen 22, welche zum Antrieb einer ebenfalls nicht dargestellten Lenkstange bekannter Art vorgesehen sind. Diese Lenkstange kann dann beispielsweise mit einer schwenkbar gelagerten Klappe oder einem Deckel derart verbunden werden, daß bei leichtem Druck auf das freie Klappenende die Kugel 12 aus der Rastnische 18 heraustritt und die Klappe dann langsam selbsttätig geöffnet wird.

## Patentansprüche

1. Hilfsvorrichtung zum Öffnen und Schließen von schwenkbar gelagerten Deckeln, Abdeckplatten und dgl., bestehend aus einem länglichen, zylinderförmig ausgebildeten Gehäuse (1) und einem darin verschieblich geführten, kolbenartigen Stößel (2), welcher durch eine Spiralfeder (3) in der eingefahrenen Stellung gehalten wird und durch einen Rastmechanismus in der ausgefahrenen Stellung fixierbar ist, wobei die Luft im Zylinderraum (6) über eine düsenförmige Öffnung (5) unter Überwindung eines die Stößelbewegung bremsenden Widerstandes einströmen und entweichen kann, **dadurch gekennzeichnet**, daß der Rastmechanismus durch eine Kugel (12) gebildet wird, welche am Austrittsende des Gehäuses (1) in einer Rinne (13) quer zur Verschieberichtung des Stößels (2) geführt und am Stößel (2) in einer im wesentlichen achsparallelen Rinne (14) eingebettet ist, wobei die Rinne (14) sich am Führungsende des Stößels (2) gabelt und die Kugel (12) beim Herausziehen des Stößels (2) auf der einen Rinne (17) bis zur Rastnische (18) wandert und beim weiteren kurzen Herausziehen in die andere Rinne (19) zwangsgeführt wird, um dann beim Einfahren des Stößels (2) wieder in die Längsrinne (14) zurückzuwandern.

2. Hilfsvorrichtung nach Anspruch 1, dadurch gekennzeichnet, daß das Gehäuse (1) eine durch eine zentrale Innenwand (10) gebildete, zylinderförmige Aussparung (7) aufweist, welche zur mittigen Aufnahme der Spiralfeder (3) dient, und daß der im Querschnitt ringförmige Stößel (2) in dem zwischen der äußeren Gehäusewand (11) und der inneren Zylinderwand (10) verbleibenden ringförmigen Zylinderraum (6) des Gehäuses (1) verschieblich geführt ist.

## Claims

1. An auxiliary device for opening and closing pivotally mounted lids, covering plates, and the like, consisting of an elongate, cylindrical housing (1) and a piston-like push rod (2) guided displaceably therein, which push rod is held in the retracted position by means of a spiral spring (3) and is able to be fixed in the deployed position by means of a retaining mechanism, wherein air can flow into, and escape from, the cylinder chamber (6) through a nozzle-like opening (5) by surmounting a resistance which brakes the movement of the push rod, characterised in that the retaining mechanism is in the form of a ball (12) which is guided at the exit end of the housing (1) in a channel (13) transversely to the direction of displacement of the push rod (2) and which is embedded in the push rod (2) in a substantially axially parallel channel (14), wherein the channel (14) forks at the guide end of the push rod (2) and the ball (12) moves as far as the retaining niche (18) on the channel (17) when the push rod (2) is withdrawn, and that on being withdrawn a little further it is forcefully guided into the other channel (19), in order to then move back into the longitudinal channel (14) when the push rod (2) is retracted.

2. An auxiliary device according to Claim 1, characterised in that the housing (1) has a cylinder recess (7) which is formed by a central inner wall (10) and which is used to centrally receive the spiral spring (3), and that the push rod (2) of annular cross-section is displaceably guided in the annular cylinder chamber, of the housing (1), which remains between the outer housing wall (11) and the inner wall (10) of the cylinder.

## Revendications

1. Dispositif d'aide à l'ouverture et à la fermeture de couvercles, plaques de recouvrement et dispositifs analogues à disposition articulée, se composant d'un boitier oblong de forme cylindrique (1) et d'un coulisseau formant piston (2) disposé coulissant à l'intérieur de celui-ci, qui est maintenu en position rentrée par un ressort hélicoïdal (3) et que l'on peut bloquer en position déployée au moyen d'un mécanismes d'encliquetage, l'air qui se trouve dans l'enceinte cylindrique (6) pouvant en l'occurrence, par une ouverture en forme de buse (5) et en surmontant une résistance qui freine le déplacement du coulisseau, être admis et s'échapper, **se caractérisant par le fait** que le mécanisme d'encliquetage se présente sous la forme d'une sphère (12) qui est guidée, à la sortie du boitier (1), dans une gorge (13), obliquement par rapport au sens de déplacement du coulisseau (2) et qui, au niveau du coulisseau (2), est encastrée dans une goulotte (14) substantiellement parallèle à l'axe, cette goulotte (14) formant en l'occurrence une fourche au niveau de l'extrémité d'introduction du coulisseau (2) et la sphère (12) se déplaçant en l'occurrence, lors de la sortie du coulisseau (2), le long d'une des deux goulottes (17) jusqu'à l'alvéole d'encliquetage (18) et lors de la poursuite de ce mouvement de sortie sur une courte distance, se trouvant forcée d'emprunter l'autre goulotte (19), pour ensuite revenir dans la goulotte longitudinale (14) lors de la rentrée du coulisseau (2).

2. Dispositif d'aide suivant la revendication 1, se caractérisant par le fait que le boitier (1) comporte un évidement de forme cylindrique (7) formé par une paroi intérieure centrale (10), qui sert à loger en position médiane le ressort hélicoïdal (3) et par le fait que le coulisseau de section circulaire (2) est disposé coulissant dans l'enceinte cylindrique de forme annulaire (6) du boitier (1) qui subsiste entre la paroi extérieure du boitier (11) et la paroi cylindrique intérieure (10).
